# EUROPEAN PATENT SPECIFICATION

(11) **EP 3 907 487 B1**
(45) Date of publication and mention of the grant of the patent: **23.07.2025**
(21) Application number: 20173325.0
(22) Date of filing: 06.05.2020
(51) Int. Cl.: G01N 15/06, G01N 21/94

(54) **SYSTEM AND PROBE THEREOF FOR MONITORING ELECTRICAL SUBSTATIONS**
SYSTEM UND SONDE ZUR ÜBERWACHUNG VON ELEKTRISCHEN UNTERSTATIONEN
SYSTÈME ET SA SONDE PERMETTANT DE SURVEILLER DES SOUS-STATIONS ÉLECTRIQUES

(43) Date of publication of application: 10.11.2021
(73) Proprietor: Tecsystem S.r.l., 20090 Cesano, Boscone (IT)
(72) Inventor: COLOMBI, Sergio, 20142 Milano (IT); CONCA, Roberto, 20094 Assago (IT)
(74) Representative: Savi, Massimiliano

(56) References cited:
- CN-A- 109 764 910
- CN-U- 202 886 918
- CN-U- 204 088 921
- US-A1- 2019 072 487

## Description

### FIELD OF THE INVENTION

The invention relates to the sector of MV/MV and MV/LV substations for electrical energy distribution. In particular, the invention relates to the technical sector of systems for monitoring and managing MV/MV and MV/LV substations for electrical energy distribution.

### PRIOR ART

As required by regulations, the maintenance of MV/MV and MV/LV electrical substations is aimed at ensuring high reliability in terms of prompt detection of faults, failure prevention and functional monitoring.

The objective of a maintenance operation is to maintain the performance of a system unchanged over time.

There are basically two types of maintenance: preventive maintenance according to CEI 78-17 and CEI 56-50 and predictive maintenance according to UNI 10147. Both types of maintenance require monitoring the electrical operating parameters and the environmental conditions, such as substation temperature and humidity, as well as cleanness.

It is the object of the present invention to provide a simple and compact environmental parameter monitoring system that allows maintenance operations on electrical panels and substations to be carried out efficiently and reliably.

Patent document CN109764910 discloses a power distribution box for construction sites provided with environmental parameters sensors and means for transmitting the collected data remotely.

Patent document CN202886918 discloses a system for monitoring environmental parameters of enclosures of power and communication units.

Patent document US20190072487 discloses examples of dust accumulation monitors.

Patent document CN204088921 discloses a distribution box provided with a removable ceiling and with sensors to detect when doors are open.

### BRIEF DESCRIPTION OF THE INVENTION

The invention achieves the object with a monitoring system of electrical substations according to claim 1.

Specifically, the dust sensor comprises a photo-transmitter for light emission and a photo-receiver which collects light as reflected by the transparent wall.

The probe comprises temperature, humidity and dust sensors integrated with a single sensor device which can be interfaced with the control unit of an electrical substation monitoring system according to the invention.

### BRIEF DESCRIPTION OF THE FIGURES

Further objects, features and advantages of the present invention will be more apparent from the following detailed description provided by way of non-limiting example and illustrated in the accompanying figures, in which:
Fig. 1 shows the block chart of a system according to an embodiment of the invention.
Fig. 2 shows a different representation of the control unit of the system according to the invention.
Fig. 3 shows the connection bus between an environmental probe and the control unit in Fig. 2.
Fig. 4 shows a perspective view of the environmental probe according to an embodiment of the invention.
Fig. 5 shows a top view of the environmental probe according to an embodiment of the invention.
Fig. 6 shows the perspective view of an optical sensor.
Fig. 7 shows a simplified diagram of the sensor in Fig. 6.
Fig. 8 shows experimental set-ups to verify the operation of the sensor in Fig. 6 with different substances in low, medium and abundant deposit conditions on the surface.

The following description of exemplifying embodiments refers to the attached drawings. The same reference numbers in the various drawings identify the same elements or similar elements. The following detailed description does not limit the invention. The scope of the invention is defined by the appended claims.

### DETAILED DESCRIPTION OF THE INVENTION

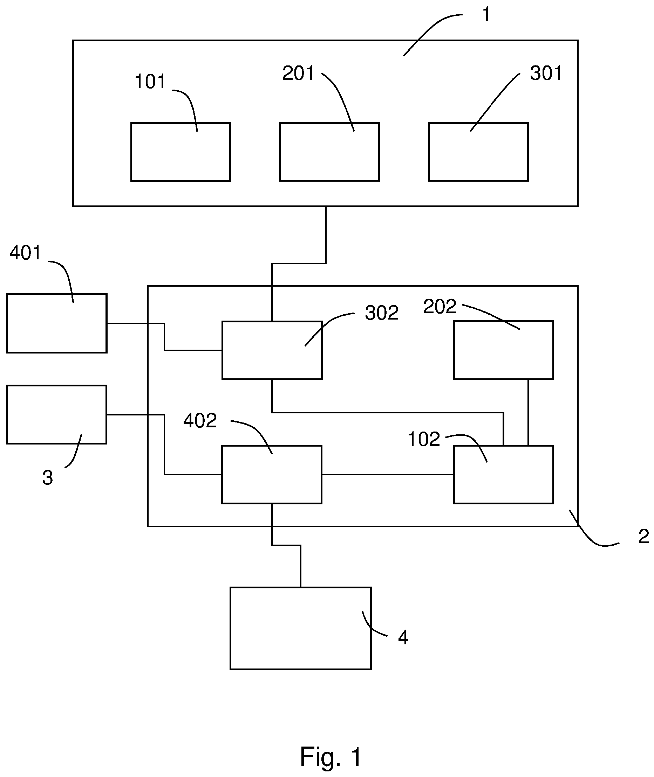

With reference to the block chart in Fig. 1, an electrical substation monitoring system according to an embodiment of the invention comprises a control unit 2 interfaced with a plurality of sensors. Such sensors include environmental sensors, including at least a dust sensor 101, a temperature sensor 201 and a humidity sensor 301, also collectively named TPU in the present description, and relay contacts 401 to detect when a substation door is open. The environmental sensors may be independently interfaced with control unit 2, but in a preferred configuration they are arranged inside a probe 1 interfaced with the control unit 2 through bus communication, as shown in the figure.

The control unit 2 is a typical microcontroller or microprocessor device 102 provided with program memory 202 and input devices 302 towards the sensors, output devices 402 towards alarm and/or actuating devices 3 and towards a graphic and/or communication interface with a remote control unit 4 of the substation. The control unit 4 can thus integrate the operating information of the transformers in the substation with environmental information for complete monitoring. For example, as we will see in detail below, the alarm/actuating devices may comprise fans, heaters and light signals.

By virtue of the control unit and the TPU sensors, it is possible to monitor temperature, dust deposit, humidity and, in an improved embodiment, also the opening of the doors (door1 and door2) of the electrical substation, thereby creating a useful tool to program and manage system maintenance.

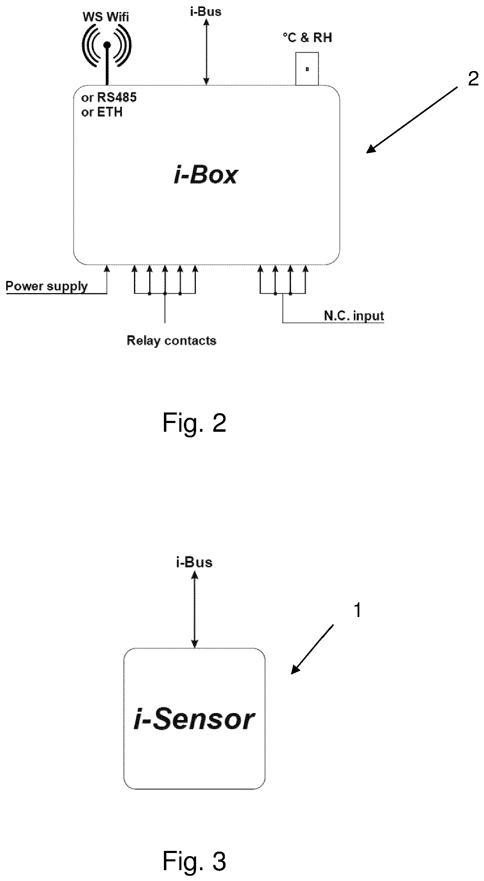

Fig. 2 shows a different schematization of the control unit 2 with the following components highlighted:
The communication bus (i-Bus) with the sensor probe 1 (i-Sensor) shown in Fig. 3;
The inputs for the temperature and humidity sensors (°C & RH);
The interface to the remote-control unit 4 of the substation (WS Wifi, RS485, ETH);
The input for the power supply;
The inputs for the door relay contacts;
Other inputs (N.C. inputs).

Then there are further outputs (not shown in Fig. 2) to send alarm or actuation commands to motor-driven fans BLDC to extract air from the substation and to heaters.

In this configuration, the sensor probe 1 is configured to accommodate one or more dust sensors, while possible temperature and/or humidity sensors are interfaced with the control unit through dedicated ports. In a particularly advantageous embodiment, the temperature and humidity sensors are also integrated with the sensor probe 1 and communicate through the i-Bus itself to create a very compact and efficient device.

More specifically, the control unit 2 allows the management of the substation environment as regards:
- temperature (°C)
- deposit of dust (dSt)
- humidity (%rH)

The substation environment is typically considered optimal for parameter values in the following ranges:
- Temperature: [-20, + 60] °C
- Dust deposit: [0, 30] dSt)
- Humidity: [10, 90] %RH

The control unit 2 may advantageously display a connection for remote monitoring, via RS485 serial, Ethernet or wireless communication and outputs for activation of commands or signals, specifically:
- Substation air extractors (FAN)
- Substation heater
- Temperature warning (ALARM)
- Anomalous operation warning (FAULT),
e.g. when:
- the temperature is above a threshold THi or below a threshold TLo
- the amount of dust deposited is above a threshold dSt
- the humidity is above a threshold %rH
- a door of the substation is opened (D1-D2)

The control unit 2 has advantageous digital and power link connections and can be easily installed on a bracket, optional, for wall mounting. It has a power supply range of 85-260Vac 50/60Hz and compact dimensions for DIN rail installation. The data exchange protocol is typically based on a bus with two data cables and two power cables.

The control unit may assume various configurations as a function of the type and number of input/output ports. Some examples are given below.

The following are present in a first configuration:
o 1 TPU SENSOR INPUT
∘ 4 RELAYS (FAN-HEATER-ALARM-FAULT)
o 2 NC DOOR CONTACT INPUTS (DOOR1 and DOOR2)

In a second configuration:
o 1 TPU SENSOR INPUT
∘ 4 RELAYS (FAN-HEATER-ALARM-FAULT)
∘ 2 NC DOOR CONTACT INPUTS (DOOR1 and DOOR2)
∘ RS485 MODBUS RTU OUTPUT

In a third configuration:
∘ 1 TPU SENSOR INPUT
∘ 4 RELAYS (FAN-HEATER-ALARM-FAULT)
∘ 2 NC DOOR CONTACT INPUTS (DOOR1 and DOOR2)
∘ ETHERNET MODBUS TCP/IP OUTPUT

The alarms relating to the various monitored parameters and the various data inputs are preferably managed and programmed as described below:

### Temperature THi

The alarms related to the temperature parameter THi can be programmed with a range from 1° C to 70° C, with 1° C steps. The parameter THi can be enabled "YES" disabled "NO". With NO programming, the parameter THi is not considered; with YES programming it is as follows:
When the sensor detects a temperature 1°C higher than the value set as the limit of THi, after about 20 seconds, the relays switch and the alarm LEDs associated with the parameter THi turn on during programming, i.e.:
- FAN extraction fan enabling (YES enabled-NO disabled)
- ALARM high temperature WARNING signal (YES enabled-NO disabled) As soon as the detected temperature returns to values either equal to or lower than the set limit, the relays switch and the LEDs turn off (FAN-ALARM).

### TLo temperature

The alarms related to the temperature parameter TLo can be programmed with a range from -40° C to 10° C, with 1° C steps. The parameter TLo can be enabled "YES" disabled "NO". With NO programming, the parameter TLo is not considered; with YES programming it is as follows:
When the sensor detects a temperature 1°C lower than the value set as the limit of TLo, after about 20 seconds, the relays switch and the alarm LEDs associated with the parameter TLo turn on during programming, i.e.:
- HEATER enabling "panel/substation heating element" (YES enabled-NO disabled)
- ALARM low temperature WARNING signal (YES enabled-NO disabled) As soon as the detected temperature returns to values either equal to or higher than the set limit, the relays switch and the LEDs turn off (HEATER-ALARM).

### Humidity rH

The alarms related to the humidity parameter rH can be programmed with a range from 10 to 90%RH, with 1% steps. The parameter rH can be enabled "YES" disabled "NO". With NO programming, the parameter rH is not considered; with YES programming it is as follows:
When the sensor detects a temperature 1% higher than the value set as the limit of rH, after about 20 seconds, the relays switch and the alarm LEDs associated with the parameter rH turn on during programming, i.e.:
- FAN/HEATER extractor fans or heater enabling (panel/substation heating element) (NO disabled-HEATER "hTr enabled heater"-FAN enabled fan)
- ALARM humidity WARNING signal (YES enabled-NO disabled)

As soon as the detected humidity returns to values either equal or lower than the set limit, the relays switch and the LEDs turn off (FAN/HEATER-ALARM).

### Dustiness dSt

The alarms related to the dust parameter dSt can be programmed with a range, e.g. from 1 to 30 dSt, with 1 dSt steps. Of course, other values can also be considered based on market requirements. The parameter dSt can be enabled "YES" disabled "NO". With NO programming, the parameter dSt is not considered; with YES programming it is as follows:
When the sensor detects a value higher than 1 dSt with respect to the value set as the limit dSt, e.g. after about 5 seconds (or for different threshold values according to the application needs), the relay switches and the LED associated with the parameter dSt turns on during programming, i.e.:
- ALARM dustiness WARNING signal (YES enabled - NO disabled)

As soon as the detected dustiness conditions return to values either equal to or lower than the set limit, the relays switch and the LEDs turn off (ALARM). It is suggested to clean the substation in case of DST ALARM.

### Entrance doors D1-D2

The control unit has two entrance doors D1 and D2, Door 1 - Door 2 connections. Enabling inputs D1 and D2 can be used to monitor the status of the door contacts (NC).

With the enabled parameter, D1 or D2 YES, the opening of the connected contact is followed, after about 20 seconds, by the switching of the relay and the turning on of the LED associated with parameter D1/D2 during programming, i.e.:
- ALARM door WARNING signal (YES enabled-NO disabled)

The control unit 2 can have optional outputs for real-time remote monitoring for acquiring values and managing all alarms. These outputs comprise:
RS485 output
RS485 Modbus RTU protocol integrated module
Ethernet output
Wireless output, e.g. WIFI, Bluetooth, ZigBee and the like

The integrated module includes all essential network features, such as a 10Base T / 100Base-TX Ethernet connection, complete TCP / IP stack, suitable for working as a Modbus TCP slave.

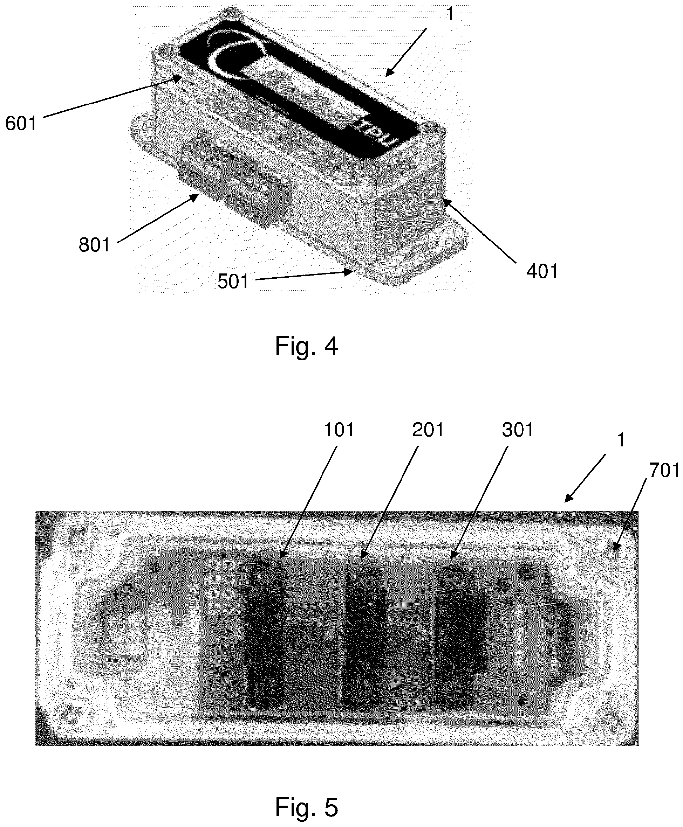

As far as sensors are concerned, a particularly advantageous embodiment provides the use of a single component which integrates several environmental sensors in it, as shown in Fig. 4 and 5. For this purpose, a container 401 with transparent lid 601 is used, which accommodates a temperature sensor 201, a humidity sensor 301 and a dust sensor 101 interfaced to a unit for bus communication with the control unit 2. The probe 1 may also contain only one of said sensors or several sensors of the same or different types in any combination.

Although the temperature sensor 201 and humidity sensor 301 may be purchased components, such as an L23EM1A humidistat, spiral capillaries such as those used in C10 room thermostats, dust sensors cannot be purchased. Indeed, the only particulate matter detectors for monitoring air quality on the market are not suited for this purpose. For this reason, the dust sensor was completely developed by virtue of an original idea of the inventors based on the following observation. When dust accumulates on a transparent surface, the light passing through such surface is reduced, i.e. the dust acts by varying the transparency of the surface. Hence the idea of using an optical detector inside a container with a transparent wall. By detecting the amount of light which can reach the sensor, it is possible to estimate the opacification effect of the transparent surface due to the possible presence of dust. For this purpose, the transparent wall must be the one which, when installed in the substation, remains in a horizontal position to accumulate as much dust as possible. According to the invention, it is the lid of a container so that it can also be easily cleaned. In one respect, the invention requires the use of a container 401, e.g. RND 455-00246 with transparent lid601, like the one shown in Fig. 4 in which an optical sensor 1001 is housed.

SHARP manufacturer produces some sensors with analog output equipped with a system consisting of an IR transmitter and a photo-receiver, such as the GP2Y1014AU0F. This type of sensor is used to control the air quality of air conditioning systems. The mechanics are designed to measure the air flowing in a duct and not that present in the environment.

The sensor can measure the density of dust in the air and produce a proportional DC voltage on a scale which is difficult to use for this application.

The control circuits of the LED and receiver are external and are quite critical in particular for degradation over time. This sensor is, therefore, usable but not optimal. Other sensors use laser technology with an integrated fan.

These sensors offer the advantage of increased selectivity from 0.3 µm to 10 µm. They are provided with an internal controller capable of identifying the concentration of particles as a function of dimensions.

These products are too sophisticated for the application discussed here, but they are equally usable.

The manufacturer OMRON recently introduced a PWM output dust sensor, the B5W-LD0101-1/2, with specific mechanics for monitoring environmental air quality. By heating a resistor, it produces a slow flow of air in a dedicated duct and counts the dust particles present.

The electronics to drive the TX and RX elements are integrated with the sensor and the output produces a series of pulses according to the amount of dust detected.

It is thus possible to know how much air is circulating over time, which is the information needed to signal the need for early maintenance. This type of sensors has proved to be the most suitable to make a device capable of determining the accumulation of dust in an electrical substation, even if obviously optical sensors of any type can be used for this purpose.

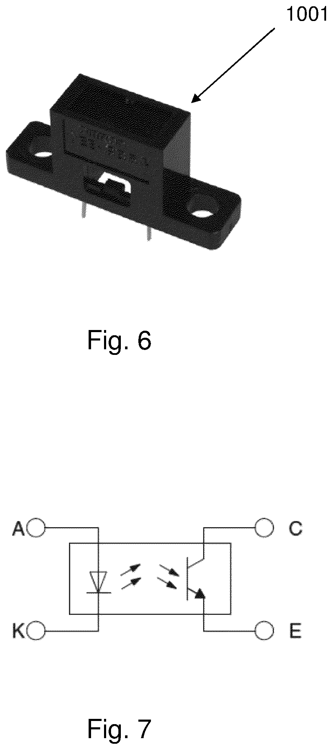

The EESB5-B model made by the manufacturer OMRON shown in Fig. 6 is a sensor which can be arranged inside a container with a transparent lid to measure the accumulation of dust. Indeed, it is a sort of optical proximity switch that the inventors have transformed into a surface deposit dust sensor.

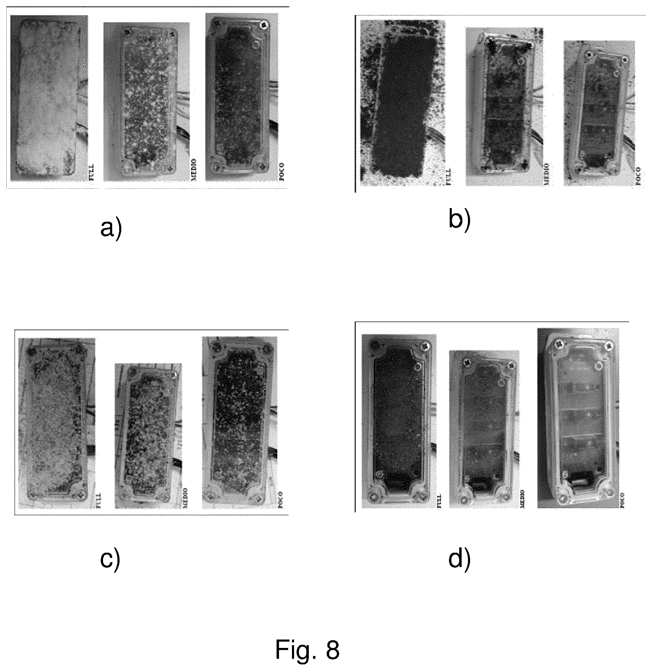

The purpose is to signal an excessive dust deposit on a flat surface. When the sensor is mounted in contact on a transparent flat surface about 2.5 mm thick, it produces a direct voltage which is directly proportional to the level of dirt deposited on the surface to be controlled. The inventors have made some tests with substances of different granularity and characteristics such as flour (a), breadcrumbs (b), coffee powder (c), dry soil (d) under conditions of low, medium and abundant deposit on the surface, as shown in Fig. 8, inserting three sensors E1, E2, E3 in an RND 455-00246 container with transparent lid as shown in Fig. 4, connecting them to a +5 V power supply and taking the output voltage (V) on a 3.9 kΩ emitter resistor. The tables of the results obtained as shown below.

Signal measurement in the presence of flour.

The flour powder is very fine and clear, so the level of reflection is very high.

| **SENSOR** | **EMPTY** | **FULL** | **MEDIUM** | **LOW** |
|---|---|---|---|---|
| E1 | 0.79 | 4.56 | 2.55 | 1.31 |
| E2 | 0.90 | 4.75 | 2.30 | 1.84 |
| E3 | 0.92 | 4.78 | 2.57 | 1.75 |

Signal measurement in the presence of ground coffee.

Ground coffee is quite coarse and dark, so the level of reflection is lower.

| **SENSOR** | **EMPTY** | **FULL** | **MEDIUM** | **LOW** |
|---|---|---|---|---|
| E1 | 0.83 | 3.09 | 1.61 | 1.13 |
| E2 | 0.92 | 3.44 | 1.40 | 1.05 |
| E3 | 0.97 | 3.21 | 1.54 | 1.13 |

Signal measurement in the presence of breadcrumbs.

Breadcrumbs are also quite coarse and dark, so the level of reflection is lower.

| **SENSOR** | **EMPTY** | **FULL** | **MEDIUM** | **LOW** |
|---|---|---|---|---|
| E1 | 0.85 | 4.3 | 2.21 | 1.28 |
| E2 | 0.94 | 4.7 | 2.57 | 1.40 |
| E3 | 0.99 | 45 | 2.54 | 1.27 |

Signal measurement in the presence of dry soil.

Dry soil powder used has a fine and medium graininess and an intermediate color shade.

| **SENSOR** | **EMPTY** | **FULL** | **MEDIUM** | **LOW** |
|---|---|---|---|---|
| E1 | 0.79 | 2.20 | 1.85 | 1.11 |
| E2 | 0.89 | 2.54 | 1.84 1.59 | 1.22 |
| E3 | 0.93 | 2.44 | | 1.28 |

As can be seen from the tables, the device according to the invention has such a sensitivity that it can be used to detect the presence of dust, e.g. in an electrical substation.

In this regard, a further example relates to a probe 1 for measuring dust in a room comprising a container 401 with a transparent wall 601 and an optical sensor 1001 coupled to the transparent wall to detect the passage of light through said wall. The sensor, in its simplest embodiment shown in Fig. 7, comprises a photo-diode for the emission of light and a photo-transistor which collects the light emitted as reflected by an object placed along an optical axis, specifically the transparent wall of the container.

Turning back to the system as a whole, the control unit 2 is configured to communicate with the environmental dust 101, temperature 201 and humidity 301 sensors. The same container used to make the dust sensor 101 as seen above is used to accommodate the temperature sensor 201 and the humidity sensor 301, thereby making a very compact probe typically interfaced with the control unit 2 through a bus e.g. power link type. The transparent wall of the container is advantageously closed so that it is easy to clean.

The container 401 can have any shape, typically prismatic, with a flanged bottom wall 501 designed to rest on a horizontal surface and a transparent lid 601 parallel to said bottom wall 501, as shown in Fig. 4. The transparent lid 601 can be fixed to the container through screws 701 arranged at the corners or by snapping. Connectors 801 are present for connecting the probe to the control unit 2 through the i-Bus on one side of the housing.

## Claims

1. An electrical substation monitoring system comprising:
a probe (1) adapted to detect environmental parameters within an electrical substation;
one or more relay contacts (401) capable of detecting the closing of one or more doors of the electrical substation;
a control unit (2) in communication with said probe (1) and with said one or more relay contacts (401), programmed to read the information coming from said probe and said one or more relay contacts (401), process said information and output the values of the detected environmental parameters to a signaling interface with possible activation of alarms and/or drives if predetermined thresholds are exceeded wherein the control unit is configured to activate an alarm signal when at least one of said one or more doors is open,
wherein said probe (1) comprises at least one dust sensor (101), adapted to detect the amount of dust which is deposited on a flat surface, a temperature sensor (201) and a humidity sensor (301) integrated, and
wherein the probe (1) comprises a container (401) with a bottom wall (501) intended to rest on a horizontal surface in the substation and a transparent wall (601) parallel to said bottom wall (501), the bottom wall supporting the temperature sensor (201), the humidity sensor (301) and the dust sensor (101) wherein the dust sensor is an optical sensor (1001) with optical axis facing towards the transparent lid (601) to detect the light reflected by said transparent lid (601) which functions as said flat surface.

2. A system according to claim 1, wherein the dust sensor (101) comprises a photo-transmitter for light emission and a photo-receiver which collects light as reflected by the transparent wall.

3. A system according to claim 1, wherein the probe (1) and the control unit (2) are configured to communicate through a bus-based data exchange protocol (i-Bus) with two data cables and two power cables.

4. A system according to one or more of the preceding claims, wherein the control unit (2) is interfaced through exit doors (402) with fan devices for the extraction of heat from the substation and heating devices for the heating of the substation, the control unit (2) being configured to read the temperature in the substation through the temperature sensor (101) and act on said devices so that when the temperature exceeds a maximum temperature threshold (THi) the control unit controls the fan devices when the temperature drops below a minimum temperature (TLo) the control unit controls the heater devices to restore the temperature conditions in a range between said minimum temperature (TLo) and said maximum temperature (THi).

5. A system according to one or more of the preceding claims, wherein the control unit (2) comprises one or more doors (402) interfaced with a remote control unit (4) for the real-time remote monitoring of the substation through the acquisition of the values detected by the sensors, alarm and drive management.

6. A system according to claim 5, wherein said doors (402) comprise one or more outputs selected from the group comprising: RS485 output, integrated module RS485 Modbus RTU protocol, Ethernet output, wireless output e.g. WIFI, Bluetooth, ZigBee and the like.

## Patentansprüche

1. Überwachungssystem für elektrische Unterstationen, umfassend:
eine Sonde (1), die dazu geeignet ist, Umgebungsparameter innerhalb einer elektrischen Unterstation zu erfassen;
einen oder mehrere Relaiskontakte (401), die in der Lage sind, das Schließen einer oder mehrerer Türen der elektrischen Unterstation zu erfassen;
eine Steuereinheit (2), die mit der Sonde (1) und dem einen oder den mehreren Relaiskontakten (401) in Verbindung steht und dazu programmiert ist, die von der Sonde und dem einen oder den mehreren Relaiskontakten (401) kommenden Informationen zu lesen, die Informationen zu verarbeiten und die Werte der erfassten Umgebungsparameter an eine Signalisierungsschnittstelle auszugeben, wobei bei Überschreiten vorbestimmter Schwellenwerte Alarme und/oder Antriebe aktiviert werden können, wobei die Steuereinheit dazu konfiguriert ist, ein Alarmsignal auszulösen, wenn mindestens eine der einen oder mehreren Türen offen ist,
wobei die Sonde (1) mindestens einen Staubsensor (101), der dazu geeignet ist, die auf einer ebenen Oberfläche abgelagerte Staubmenge zu erfassen, einen Temperatursensor (201) und einen integrierten Feuchtigkeitssensor (301) umfasst, und
wobei die Sonde (1) einen Behälter (401) mit einer Bodenwand (501), die dazu bestimmt ist, auf einer horizontalen Oberfläche in der Unterstation zu ruhen, und eine transparente Wand (601) parallel zu der Bodenwand (501) umfasst, wobei die Bodenwand den Temperatursensor (201), den Feuchtigkeitssensor (301) und den Staubsensor (101) trägt, wobei der Staubsensor ein optischer Sensor (1001) ist, dessen optische Achse dem transparenten Deckel (601) zugewandt ist, um das von dem transparenten Deckel (601), der als die ebene Oberfläche fungiert, reflektierte Licht zu erfassen.

2. System nach Anspruch 1, wobei der Staubsensor (101) einen Lichtsender zur Lichtemission und einen Lichtempfänger umfasst, der das von der transparenten Wand reflektierte Licht auffängt.

3. System nach Anspruch 1, wobei die Sonde (1) und die Steuereinheit (2) dazu konfiguriert sind, durch ein busbasiertes Datenaustauschprotokoll (i-Bus) mit zwei Datenkabeln und zwei Stromkabeln zu kommunizieren.

4. System nach einem oder mehreren der hervorgehenden Ansprüche, wobei die Steuereinheit (2) durch Ausgangstüren (402) mit Gebläsevorrichtungen zum Abführen von Wärme aus der Unterstation und Heizvorrichtungen zum Beheizen der Unterstation verbunden ist, wobei die Steuereinheit (2) dazu konfiguriert ist, die Temperatur in der Unterstation über den Temperatursensor (101) zu lesen und auf die Vorrichtungen einzuwirken, so dass, wenn die Temperatur einen maximalen Temperaturschwellenwert (THi) überschreitet, die Steuereinheit die Gebläsevorrichtungen steuert, und wenn die Temperatur unter eine minimale Temperatur (TLo) fällt, die Steuereinheit die Heizvorrichtungen steuert, um die Temperaturbedingungen in einem Bereich zwischen der minimalen Temperatur (TLo) und der maximalen Temperatur (THi) wiederherzustellen.

5. System nach einem oder mehreren der hervorgehenden Ansprüche, wobei die Steuereinheit (2) eine oder mehrere Türen (402) umfasst, die mit einer Fernsteuerungseinheit (4) für die Echtzeit-Fernüberwachung der Unterstation durch die Erfassung der von den Sensoren erfassten Werte, die Alarm- und Antriebshandhabung verbunden sind.

6. System nach Anspruch 5, wobei die Türen (402) einen oder mehrere Ausgänge umfassen, die aus der Gruppe ausgewählt sind, die umfasst: RS485-Ausgang, integriertes Modul RS485 Modbus RTU-Protokoll, Ethernet-Ausgang, drahtloser Ausgang, z. B. WLAN, Bluetooth, ZigBee und dergleichen.

## Revendications

1. Système de surveillance de sous-station électrique comprenant :
une sonde (1) adaptée pour détecter les paramètres environnementaux à l'intérieur d'une sous-station électrique ;
un ou plusieurs contacts relais (401) capables de détecter la fermeture d'une ou plusieurs portes de la sous-station électrique ;
une unité de commande (2) en communication avec ladite sonde (1) et avec lesdits un ou plusieurs contacts relais (401), programmée pour lire les informations provenant de ladite sonde et desdits un ou plusieurs contacts relais (401), traiter lesdites informations et fournir en sortie les valeurs des paramètres environnementaux détectés à une interface de signalisation avec activation possible d'alarmes et/ou d'actionneurs si des seuils prédéterminés sont dépassés, dans laquelle l'unité de commande est configurée pour activer un signal d'alarme lorsqu'au moins une desdites une ou plusieurs portes est ouverte,
dans lequel ladite sonde (1) comprend au moins un capteur de poussière (101), adapté pour détecter la quantité de poussière qui se dépose sur une surface plane, un capteur de température (201) et un capteur d'humidité (301) intégrés, et
dans lequel la sonde (1) comprend un récipient (401) avec une paroi inférieure (501) destinée à reposer sur une surface horizontale dans la sous-station et une paroi transparente (601) parallèle à ladite paroi inférieure (501), la paroi inférieure supportant le capteur de température (201), le capteur d'humidité (301) et le capteur de poussière (101), dans lequel le capteur de poussière est un capteur optique (1001) avec un axe optique tourné vers le couvercle transparent (601) pour détecter la lumière réfléchie par ledit couvercle transparent (601) qui fonctionne comme ladite surface plane.

2. Système selon la revendication 1, dans lequel le capteur de poussière (101) comprend un photo-transmetteur pour l'émission de lumière et un photorécepteur qui recueille la lumière réfléchie par la paroi transparente.

3. Système selon la revendication 1, dans lequel la sonde (1) et l'unité de commande (2) sont configurées pour communiquer via un protocole d'échange de données basé sur bus (i-Bus) avec deux câbles de données et deux câbles d'alimentation.

4. Système selon une ou plusieurs des revendications précédentes, dans lequel l'unité de commande (2) est interfacée par des portes de sortie (402) avec des dispositifs de ventilation pour l'extraction de la chaleur de la sous-station et des dispositifs de chauffage pour le chauffage de la sous-station, l'unité de commande (2) étant configurée pour lire la température dans la sous-station à travers le capteur de température (101) et agir sur lesdits dispositifs de sorte que lorsque la température dépasse un seuil de température maximale (THi), l'unité de commande commande les dispositifs de ventilation lorsque la température descend en dessous d'une température minimale (TLo), l'unité de commande commande les dispositifs de chauffage pour rétablir les conditions de température dans une plage entre ladite température minimale (TLo) et ladite température maximale (THi).

5. Système selon une ou plusieurs des revendications précédentes, dans lequel l'unité de commande (2) comprend une ou plusieurs portes (402) interfacées avec une unité de commande à distance (4) pour la surveillance à distance en temps réel de la sous-station à travers l'acquisition des valeurs détectées par la gestion de capteurs, alarme et actionneur.

6. Système selon la revendication 5, dans lequel lesdites portes (402) comprennent une ou plusieurs sorties sélectionnées dans le groupe comprenant : une sortie RS485, un protocole Modbus RTU de module intégré RS485, une sortie Ethernet, une sortie sans fil, par exemple WIFI, Bluetooth, ZigBee et similaire.
